(19) Europäisches Patentamt

European Patent Office

Office européen des brevets

(11) **EP 1 209 585 A2**

(12) **EUROPEAN PATENT APPLICATION**

(43) Date of publication:
29.05.2002 Bulletin 2002/22

(51) Int Cl.⁷: **G06F 17/30**

(21) Application number: 01127041.0

(22) Date of filing: 14.11.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 25.11.2000 KR 2000070689

(71) Applicant: **LG ELECTRONICS INC.**
**Seoul (KR)**

(72) Inventors:
• **Lee, Jin Soo**
  **Songpa-ku, Seoul (KR)**
• **Kim, Heon Jun**
  **Sungnam-si, Kyounggi-do (KR)**

(74) Representative:
**Heinze, Ekkehard, Dipl.-Phys. Dr. et al**
**Meissner, Bolte & Partner**
**Postfach 86 06 24**
**D-81633 München (DE)**

(54) **Multimedia retrieval method using multi-weighted feature**

(57) The present invention relates to a multimedia retrieval method and a weight studying method for obtaining a far advanced multimedia retrieval function by using a plurality of weights as data for describing the characteristics of the multimedia data, and selecting an appropriate weight data in accordance with different combinations of the descriptors. In addition, the present invention relates to a multimedia retrieval method and a weight studying method for obtaining a far advanced multimedia retrieval function by using a plurality of weights as data for describing the characteristics of the multimedia data, and selecting an appropriate weight data in accordance with different viewpoints of queries.

FIG. 1

EP 1 209 585 A2

**Description**

**BACKGROUND OF THE INVENTION**

1. Field of the Invention

The present invention relates to a multimedia retrieval method using a plurality of descriptors. In particular, the present invention relates to a multimedia retrieval method for providing a more advanced retrieval function by using an automatically selected optimum weighted data in accordance with a combination of the descriptor that is used for a query in a format a user wants.

2. Description of the Related Art

A multimedia retrieval including image retrieval generally uses combined data with colors, textures or shapes. However, since each multimedia data has a different descriptor for retrieving relevant data, a user can enjoy a far advanced retrieval function by using an importance of data regarding the descriptor necessary for retrieving the data if he or she asks a particular query.

One of the typical multimedia retrieval technologies in the related art used a user interface through which the user can designate the number of descriptors he or she intended to use for retrieving every time the user does the multimedia retrieval.

The user can perform the multimedia retrieval by designating an importance of each descriptor, for example, 50% for the color and 30% for the texture.

Another example of the multimedia retrieval technology in the related art provided feedback data on an image similar to the image the user was looking for, and automatically calculated the weight of such descriptor. However, this method appeared to be disadvantageous because the weight was applied only when the user gave feedback for every query.

On the other hand, an attempt recently has been made to standardize the data necessary for retrieving, such as, MPEG-7 and so forth. Thus, it became possible to standardize the weight data on the descriptor, and adds the standardized data to the multimedia data. In such case, each weight data on respective data can be applied to a query all the time regardless of a request of the user, and an advanced retrieval function is successfully carried out.

In this way, a large number of descriptors may be designated in the standardized data since it designates all kinds of descriptors required within a possible application range. In reality, however, only part of descriptors can be used for the query and retrieval depending on the application.

For example, the descriptor for explaining a video segment can include a variety of semantic data like the text data, and low-level descriptors like a color histogram.

Especially, some low-level descriptors might describe motion data in consideration of that a video is used for the multimedia in this case, and include the descriptors of still images, such as, color, texture and shape data because the video image is a collection of still images in a sense.

If the multimedia retrieval is associated with an application for comparing a video segment and other segments, all types of data including motion, color texture and shape data can be used.

However, if the multimedia retrieval were associated with comparison of the video segment and the still image, the motion data would not be necessary.

Therefore, the descriptors that are actually used in the multimedia retrieval can be different depending on each application. In this case, the relative weight between the descriptors can be altered.

As another example, suppose that the descriptors included in the video segment are color histograms, representative color data and texture histograms, and Application 1 uses all three descriptors while Application 2 uses the color histograms and texture histograms only.

Then, in case of the Application 1, the weight on each descriptor of a particular multimedia data can be designated as 0.5, 0.3 and 0.2, respectively, on the condition that all three descriptors (color histograms, representative color data and texture histograms) are used. Meanwhile, in case of the Application 2, since the color histograms were not used for the same data, the relative weights 0.3 and 0.2 on the rest two descriptors, i.e., representative color data and the texture histograms are converted and designated to 0.6 and 0.4, respectively.

However, the method described above is not that practical in reality because it is appropriate only when all of the descriptors in the video segment are unrelated and orthogonal to one another. Unfortunately, this is not true in many cases.

That is, unlike the texture histograms, the color histograms and representative color data have a close relationship to each other in terms of color.

Therefore, when all of three descriptors (color histograms, representative color data and texture histograms) are used as in the Application 1, having two kinds of data on colors (color histograms and representative color data) and one kind of texture data, the color data can be used practically more than expected, compared with the Application 2 where only one kind of color data is used.

Supposed that each weight of those three descriptors is 0.5, 0.3 and 0.2, respectively. To use all of three descriptors is pretty similar to use color relevant data (2) and texture relevant data (1) at a ratio of 0.8: 0.2 (color: texture).

As illustrated in the Application 2, if the representatives color data and the texture histograms are combined at the ratio of 0.6: 0.4 in terms of the importance, less color data is used compared to the case of using all three descriptors (color: texture = 0.8: 0.2).

For the reason above, it is better to use all three descriptors than to use two types of descriptors, such as, representative color data and texture histograms, for increasing the importance of the representative color data.

Thus, in case of using a plurality of combined descriptors, it is possible to apply optimized weights with different ratios from one another according to the combination of each descriptor.

Especially, the weight data in the multimedia data where different combinations of descriptors are available should have appropriate weight data separately in accordance with every possible combination of descriptors, thereby obtaining the results from a highly efficient retrieval.

Going back to the example again, when the multimedia retrieval is carried out based on the combination of the representative color data and the texture histograms among the color histograms, representative color data and texture histograms, it is considered that the weight of the combination lies on the color and the texture, and the weight of the color data is set to be relatively higher, i.e., 0.8: 0.2 or 0.7: 0.3. Thus, it is important to have appropriate weight data for each combination of descriptors in order to obtain a more advanced retrieval function.

In the meantime, it is also true that even the identical multimedia data can bring different retrieval results in accordance with an intention of a query.

For instance, if the query intends to find an image with a boat, the retrieval might search for any image that has a boat and not necessarily ocean scenery, while if the query intends to find an image with ocean scenery, it might end up with any kind of ocean scenery without a boat, or the combination of the two is also possible.

Similarly, if the same data is retrieved with a particular query, the result can be varied depending on the kinds of the query (intention, viewpoint). However, if the viewpoint of the query is manifested by different weights, an intended result can be obtained.

Therefore, the multimedia data should have a plurality of weight feature for obtaining an appropriate retrieval result corresponding to a query. Also, the multimedia data should provide a method for automatically selecting the appropriate weight for the viewpoint of the query by figuring out what the user wished to query, and a method for extracting a plurality of weights therefore.

## SUMMARY OF THE INVENTION

It is, therefore, an object of the present invention to provide a multimedia retrieval method using a multi-weighted feature in order to obtain a more advanced retrieval function.

It is another object of the present invention to provide a multimedia retrieval media for retrieving a multimedia object.

To achieve the above object, there is provided a multimedia method using a plurality of descriptors for retrieving an object, comprising the steps of: studying of a descriptor weight in accordance with a combination of the descriptors among the plurality of descriptors for a query and adding the weight to the multimedia descriptor; and retrieving based on the selected weight corresponding to the combination of descriptors in accordance with the combination of descriptors for the query at the time of the multimedia retrieval.

Here, the studying of the weight according to the combination of descriptors is made possible through the retrieval result from retrieving images by using the combination of the corresponding descriptors, or feedback from the user regarding a similar object in connection with a group data on any similar objects defined beforehand.

Among other descriptors included in the combination of descriptors above, as the descriptor increases a similarity between similar objects, a higher weight is obtained.

The step of retrieving a selected weight corresponding to the combination of descriptors in accordance with the combination of descriptors for the query during the multimedia retrieval further comprises the steps of: measuring a similarity on a similar object the user gave feedback after selecting from the group data on similar objects or the retrieval result, by using every weight included in the multimedia descriptors; and retrieving based on the selected weight outputting the highest similarity among other similarities measured.

In the step of retrieving based on the corresponding weight to the combination of descriptors used in the query during the multimedia retrieval, when the user selects a particular descriptor for the retrieval, only the weight studied of the descriptors selected from the plurality of weights included in the multimedia descriptors is used for the retrieval.

Again, in the step of retrieving based on the corresponding weight to the combination of descriptors used in the query during the multimedia retrieval, when the user designates a query object and a retrieval object, only the weight studied of the predesignated descriptors in accordance with the kinds of retrieval object and query object is used for the retrieval.

In addition, for the purpose of retrieving a multimedia object by using a plurality of descriptors, the multimedia retrieval method of the present invention comprises the steps of: including a descriptor weight studied according to each viewpoint of a query for the retrieval into the multimedia descriptors; and carrying out the retrieval by selecting the corresponding weight to the viewpoint of the query from the descriptor weights included in the multimedia descriptors.

In addition, the multimedia retrieval medium of the present invention is comprised of a plurality of descriptors for retrieving the multimedia object; and data features including optimum weight data in accordance with every combination of the descriptors especially for the query among the plurality of descriptors.

Here, the descriptors are combined differently based on the viewpoints of each query, and the weights are differentiated depending on the viewpoints of each query also.

## BRIEF DESCRIPTION OF THE DRAWINGS

The above objects, features and advantages of the present invention will become more apparent from the following detailed description when taken in conjunction with the accompanying drawings, in which:

Fig. 1 is a flow chart illustrating an extraction algorithm of weight among other studying methods of a weight based on a combination of descriptors in accordance with a preferred embodiment of the present invention;

Fig. 2 is a diagram illustrating a modified sigmoid function in order to obtain a reliability which is applied to the present invention;

Fig. 3 is a diagram explaining application examples using multiweight which is studied differently based on a combination of descriptors in accordance with another preferred embodiment of the present invention;

Fig. 4 is a diagram illustrating a display at the result of a query object and response in accordance with another preferred embodiment of the present invention;

Fig. 5 is a flow chart illustrating an extraction algorithm of weight based on a viewpoint of a query in accordance with another preferred embodiment of the present invention;

Fig. 6 is a diagram illustrating a weight feature including description data on a viewpoint of a query in accordance with another preferred embodiment of the present invention;

Fig. 7 is a diagram showing an example of a query image and a query viewpoint in accordance with another preferred embodiment of the present invention; and

Fig. 8 is a diagram showing a weight feature including data on descriptors in accordance with another preferred embodiment of the present invention.

## DETAILED DESCRIPTION OF THE PREFERRED EMBODIMENT

A preferred embodiment of the present invention will now be described with reference to the accompanying drawings. In the following description, same drawing reference numerals are used for the same elements even in different drawings. The matters defined in the description are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

For a better understanding of a multimedia retrieval and a weight studying method, the present invention is divided into four categories: (1) a studying method of multiweight according to a combination of descriptors; (2) an application method of multiweight according to a combination of descriptors; (3) a studying method of multiweight according to a viewpoint of a query; and (4) an application method of multiweight according to a viewpoint of a query.

## 1. A Studying Method of Multiweight According to Combination of Descriptors

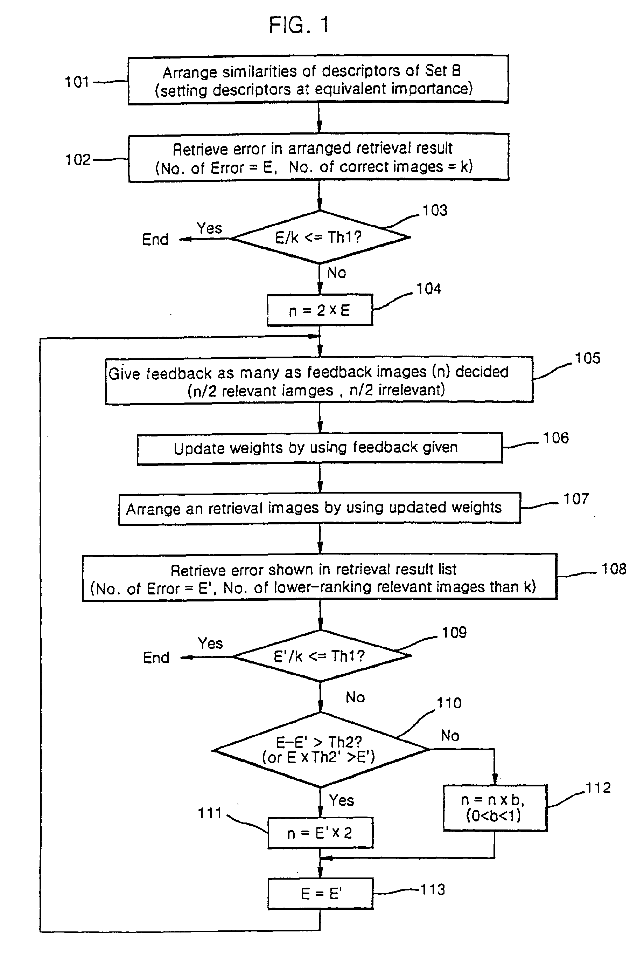

Suppose that a set of the entire descriptors for the multimedia retrieval is Set A= [C1, C2, C3, .... , CN] and a set of the descriptors used for the combination of current descriptors is Set B= [Ci1, Ci2, Ci3, .... , CM] $\subseteq$ Set A. An algorithm for extracting weight for the set B is explained in Fig. 1, illustrating image retrieval.

First of all, each descriptor of the Set B [Ci1, Ci2, Ci3, ...., CM] is set to have an equivalent importance, and the similarities thereof are measured and arranged (S101).

Any type of error in the arranged retrieval result is retrieved and the number of errors is designated as E. In other words, if the number of correct images is K, the error means a lower-ranking image than a high-ranking K regardless of the fact that the error is a correct image as well. The number of error is set at E.

The correct image data can be obtained through two methods: the first is that the user gives feedback on the correct image data in a first retrieval result obtained from step 101; and the second is that collect images in the same class from a database and group the images beforehand, and later find the correct image data by using the sample group.

Next, if the error, E (or E/k, wherein E is the number of the error image, E/k is a degree of error from a point of accuracy in percentage) is below a specific critical value, Th1, the studying method is completed (S 103).

If the error is not below the critical value described above, the number of images necessary for the feedback is decided by using the error E, n=2 x E (S104).

The feedback is then given as many as the number of the feedback images decided before (S105). Here, n number of the error pages having the most errors is arbitrarily selected among the error pages used in step 102, and are designated as feedback images automatically. The lower the image ranks, the more error exists.

A weight for each descriptor is updated based on the feedback given (S106).

Using the updated weights, the image is retrieved again and arranged (S107), and any error shown in the list of the retrieval result is designated as E' (S108). If the error, E' (or E'/k) is below the specific critical value, Th1, the studying method is completed, but if not, it proceeds to the next step (S109).

The degree of decrease in the error is examined whether it exceeds a specific critical value or not (S110). That is, if E-E' is larger than the specific critical value (Th2) (or ExTh2' > E), the number of feedback images, n, in the following step is determined by using the current error E', such as, n = E' x 2 (S111). If E-E' is not larger than the specific critical value (Th2), the number of feedback images is determined as a smaller number than the previous feedback number, such as, n = n x b, 0<b<1 (S112).

At this time, in case that the number of images necessary for the feedback is even smaller than the minimum (it is 2 in the present invention, 2 = a similar image 1 + a dissimilar image 1), the number of the feedback images is designated as 2.

Lastly, the current E' is re-designated as E, and the studying method goes back to step 105 (S113).

In this way, the weight according to the combination of descriptors, namely, the weight for the Set B was extracted, and the weight was updated by using the feedback images in step 106. The method for updating the weight is explained below.

A new weight (New_W) to be updated is first calculated:

$$New\_W = (Reliability \times Old\_W + Cur\_W) / (Reliability + 1)$$

Wherein, Cur_W is a relative weight calculated based on the feedback given currently; Old_W is a weight before the renewal; and Reliability is a value of reliability of the current weight.

Evidently, the reliability indicates how much the weight is reliable. And, the new reliability (new_W) (new Reliability to be updated) can be calculated as follows:

$$New\_R = old\_R (1 + Increase\ R) + a$$

$$Increase\ R = f (\# feedback) \times (Precision\ (t) - Precision\ (t-1))$$

wherein, # feedback is the number of feedback in one stage; and old_R is the previous reliability.

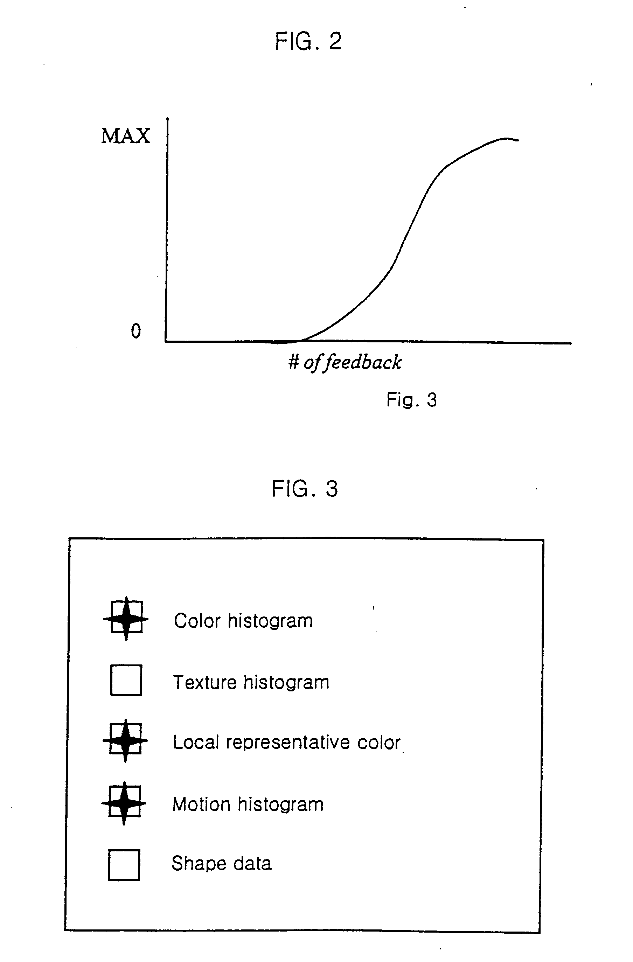

Moreover, if f(# feedback) is small, it returns an approximate value to 0, and if f gets larger, it return an increment. This function is shown in Fig. 2, and a modified sigmoid function can be used in this case.

As explained before, the relative weight based on the currently given feedback (Cur_W) can be calculated as follows:

$$Cur\_W = a\ Sim\ (RI, FI), supposing\ that\ FI\ is\ a\ relevant\ image$$

$$Cur\_W = a\ Dist\ (RI, FI), supposing\ that\ FI\ is\ an\ irrelevant\ image$$

wherein, FI is a feedback image; RI is a reference image; W is a type weight (Wk), an element weight (We) or a position weight (Wp); and a is a normalize coefficient for Wk, We and Wp.

In addition, Sim (FI, RI) indicates the similarity between the reference image (RI) and the feedback image (FI) in case of using the descriptors, k, e and p. On the other hand, Dist (FI, RI) indicates the dissimilarity between the reference image (RI) and the feedback image (FI) in case of using the descriptors, k, e and p.

Therefore, when the retrieval is carried out by using the combination of descriptors in the Set B, the corresponding weight to the image is successfully studied as described above.

Similarly, if there exists another combination of descriptors, Set C, appropriate weights can be retrieved and studied by using the descriptors included in the Set C. At this time, the dimension of a weight for each descriptor is the same as the number of constituents in the Set.

### 2. Application Method of Multiweight According to Combination of Descriptors

As explained before, differently studied multiweight according to each combination of descriptors can be applied to other cases.

To begin with, the user can select a descriptor for the multimedia retrieval by using a user interface shown in Fig. 3.

Particularly, in the Fig. 3, color histograms, representative color data and motion histograms are selected for example out of five descriptors (color histograms, texture histograms, representative color data, motion histograms and shape data).

Once the user selects descriptors necessary for the multimedia retrieval by using the user interface, the weights thereof are automatically selected for the retrieval based on the method explained in Fig. 1 according to the combination of descriptors selected.

A method of selecting a weight out of a plurality of weights based on the study on the selected descriptors only is now explained below.

The weight feature includes each weight and data showing that which weight goes with which descriptor.

Based on the data aforementioned, it becomes possible to find out which weight of a descriptor is included in the current weight, and the descriptors represented by the weights included select the corresponding weights to the descriptors selected.

Another method of selecting multiweight is that the user selects a similar object to what he or she intended to find from the early retrieval result.

As for the similar object selected, the similarity is measured by using respective weight that is studied according to the combination of descriptors, and the weight outputting the result based on the highest similarity is selected.

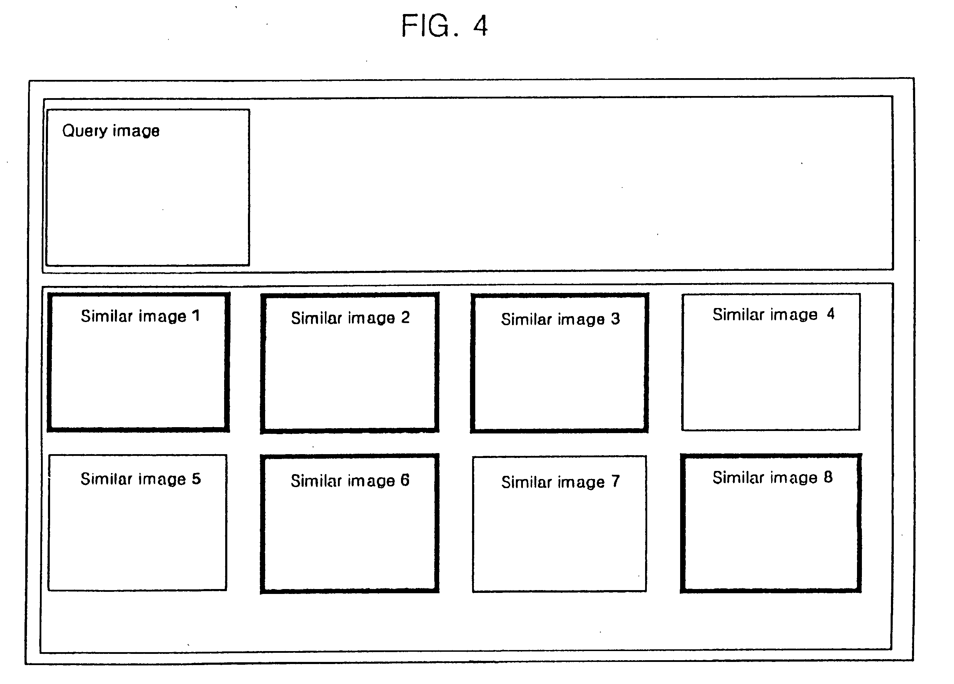

If the multimedia object already contains data on an example of the objects belonging to the similar class, the retrieval method displays the identical class object with the query object (in this case, it is an image), as shown in Fig. 4, and helps the user to select the object he or she intended to find.

In other words, the method displays the identical class image with the query image as the similar image, and makes it possible for the user to select the image he or she wanted.

The similar image surrounded by a bold rectangle in Fig. 4 is the object the user selected as the similar image. Once the object is selected, the similarity between the similar image selected by the user and the query image is measured by using each studied weight in accordance with the combination of descriptors, and the weight outputting the highest similarity is selected.

Meanwhile, the weight can be selected by different kinds of queries that are designated in advance.

For example, the queries can be divided into several kinds, e.g., video and video retrieval, or video and still image retrieval. The descriptors for each case are determined and the corresponding weights are designated in order to select the appropriate weight in accordance with the kind of the query of the user.

The kind of query the user asked can be determined once a query object and a retrieval object are determined. For instance, in case that the kind of the query is a video segment and the retrieval object is an image database, it turns out the retrieval of the video and still images.

### 3. Studying Method of Multiweight According to Viewpoint of Query

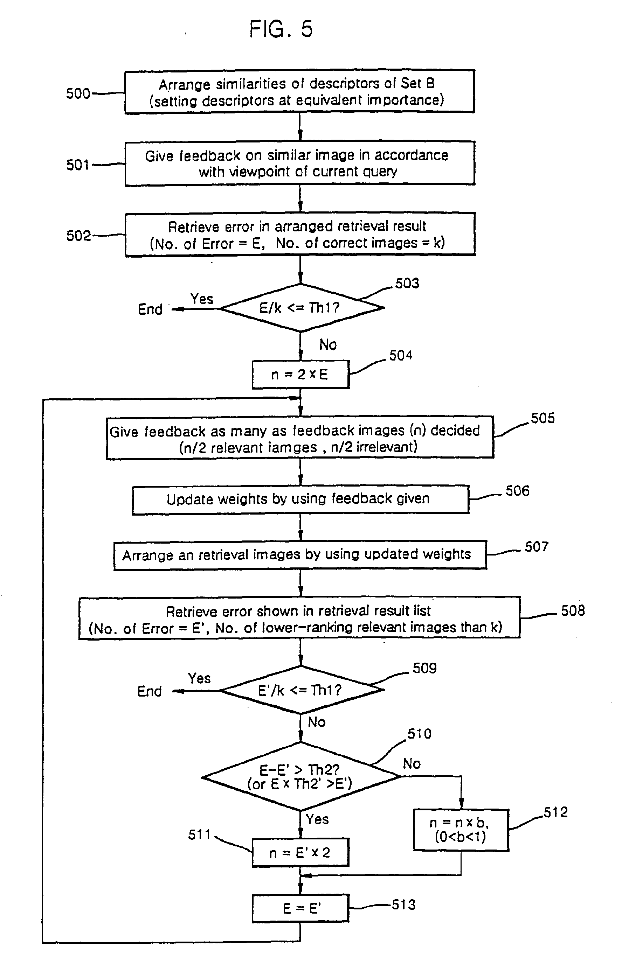

Fig. 5 illustrates an example for explaining the algorithm for extracting the weight in accordance with the viewpoint of a particular query.

First of all, the descriptors in possession are set at the equivalent importance, and the similarity thereof is measured and arranged later (S500).

Next, the user gives feedback on the similar image corresponding to the viewpoint of the current query in the early retrieval result (S501). In the following steps, the similar image from the feedback is considered as the correct answer and the studying is proceeded from there.

Especially in steps of 500 and 501, the data on the correct answer according to the viewpoint of the particular query was retrieved based on the feedback given by the user from the early retrieval result. If every object contains the data on image examples belonging to the same class, instead of carrying out the early retrieval as in step 500, the image examples belonging to the same class are displayed first, and the user can select the similar image among the displayed images.

From now on, the same procedure with that of Fig. 1 after step 102 is repeated here.

That is, the number of error, E, is designated by retrieving any error in the arranged retrieval result (S502). If the error E (or E/k) is below the specific critical value Th1, the studying method is completed, but if not, the number of images necessary for the feedback (n = 2 x E) is decided by using the error E (S503 and S504). The feedback is given as many as the number of images, n, in accordance with the method described above (S505).

After that, a weight of each descriptor is undated by using the feedback given (S506), and based on the updated weight, the image is retrieved again and arranged (S507). Another error, E', is designated after retrieving the error shown in the list of the retrieval result (S508). Here, if E' (or E'/k) is below the specific critical value, Th1, the method is completed, but if not, the next step is proceeded (S509).

The degree of decrease in the error is examined whether or not it exceeds the specific critical value (S510), and based on the result obtained here, the number of images, n, necessary for the feedback is determined (n = E' x 2) by using the current error E' (S511). Otherwise, the number of images for the feedback can be decided to be smaller than the number of the previous feedback (n = n x b, 0<b<1) in the next step 512, and after re-designating the current error (E') as E, step 505 is repeated (S513).

## 4. Application Method of Multiweight According to Viewpoint of Query

As explained before, differently studied multiweight according to each combination of descriptors can be applied to other cases.

In the beginning, the user selects the similar object to the object he or she intended to find in the early retrieval result.

As for the similar object selected, the similarity is measured by using respective weight that is studied according to the combination of descriptors, and the weight outputting the result based on the highest similarity is selected.

If the multimedia object already contains data on an example of the objects belonging to the similar class, the retrieval method displays the identical class object with the query object as shown in Fig. 4, and helps the user to select the object he or she intended to find.

Once the object is selected, the similarity therefore is measured by using each weight, and the weight appropriate for the corresponding viewpoint of the query outputting the result of the highest similarity is selected.

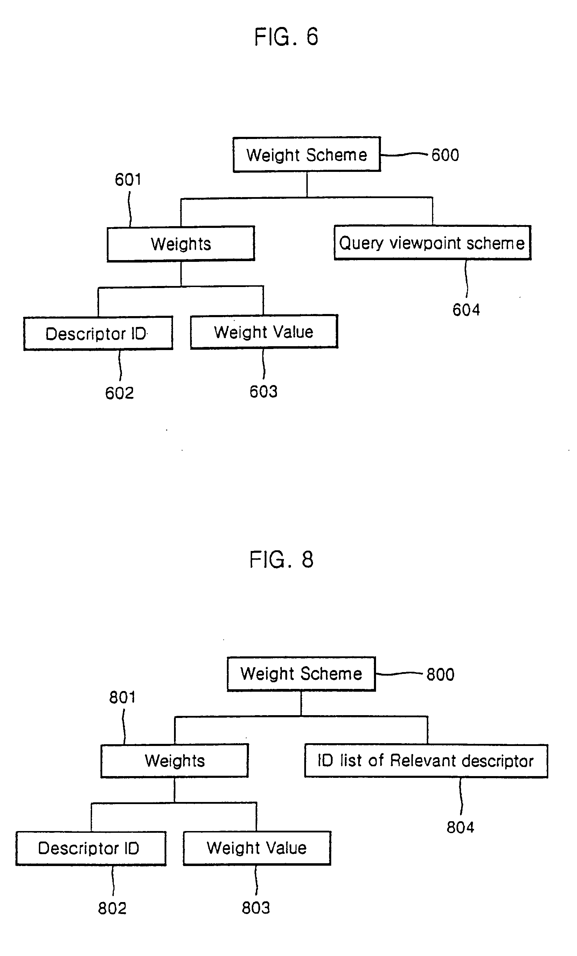

Fig. 6 shows an example of the weight feature, which contains scheme for the viewpoint of the query.

According to Fig. 6, the weight scheme 600 is comprised of a descriptor ID 602 for describing weights 601, the corresponding weight value 603 and scheme of the viewpoint for the query 604.

If the viewpoint of the corresponding query in the weight feature is described in text as shown in Fig. 6, this also can be applied.

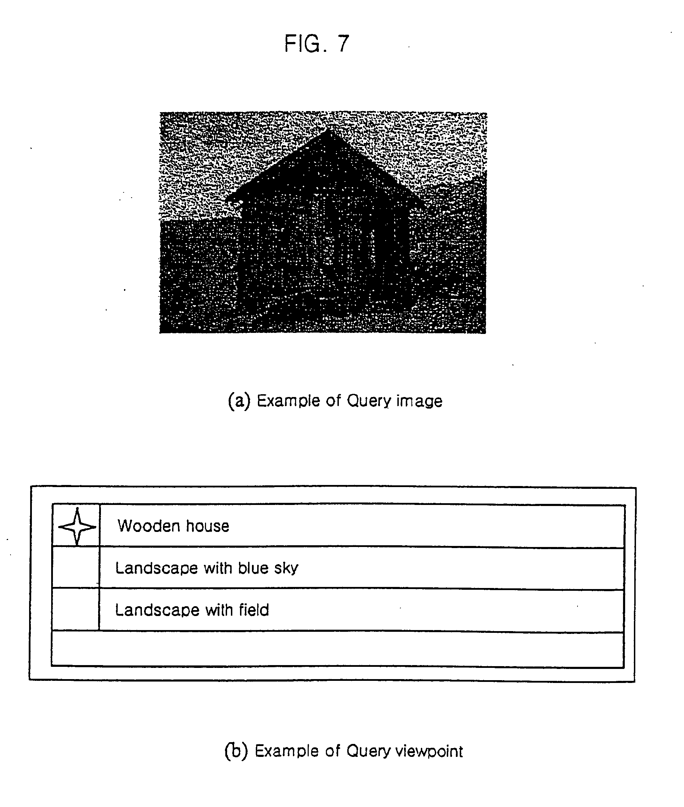

In other words, the viewpoints of the queries of existing weights (especially the viewpoints of the queries described in text) are arranged as shown in Fig. 7 to be selected by the user. Particularly, Fig. 7 illustrates an image of landscape including a house, where the viewpoint of the query can be the things like a house, a blue sky or a field.

On the other hand, Fig. 8 shows a weight feature containing data on the combination of descriptors.

According to Fig. 8, the weight scheme 800 is comprised of a descriptor ID 802 for describing weights 801, the corresponding weight value 803 and a list of descriptors associated 604.

Using the weight feature containing data on the combination of descriptors, it becomes easier to select an appropriate weight through an immediate use of the data.

Until now, a multi-weight feature according to the viewpoint of the query and the multi-weighed feature according to the combination of descriptors have been explained.

Therefore, using the multi-weighed feature according to the combination of descriptors and the multi-weighed feature according to the viewpoint of the query, the corresponding weight can be automatically selected and used in spite of the fact that each weight feature does not necessary have data on the combination of the descriptors or the viewpoint of the query itself.

However, if each weight feature contains data on the combination of descriptors currently used for the weight as shown in Fig. 8, or the viewpoint of the query is described in each weight feature as shown in Fig. 6, it is much easier to select an appropriate weight by using the data immediately.

In such case, although a more easy application is possible, the same can be regarded defective in terms of the size of data since additional data are required.

As explained hitherto, the multimedia retrieval method of the present invention enables a far advanced retrieval function by providing each object with the optimum descriptor weight that is appropriate for a variety of applications.

In addition, the present invention enables the user to carry out different retrievals according to different viewpoints even on the same object by extracting an optimum weight for the viewpoint of the query the user asks, thereby making it come true of the user-centered retrieval.

While the invention has been shown and described with reference to certain preferred embodiments thereof, it will be understood by those skilled in the art that various changes in form and details may be made therein without departing from the spirit and scope of the invention as defined by the appended claims.

**Claims**

1.  A multimedia retrieval method for retrieving a multimedia object by using a plurality of descriptors, the method comprising of the steps of:

    studying of a descriptor weight in accordance with a combination of the descriptors among a plurality of descriptors necessary for a query and adding the weight to a multimedia descriptor; and
    retrieving based on the selected weight corresponding to the combination of descriptors in accordance with the combination of descriptors for the query at the time of the multimedia retrieval.

2.  The method of claim 1, wherein the studying of the weight in accordance with the combination of the descriptors is accomplished through the retrieval result from retrieving images by using the combination of the corresponding descriptors, or a feedback given by a user regarding a similar object in connection with a group data on any similar objects defined in advance.

3.  The method of claim 2, wherein the descriptor increasing the similarity between similar objects results a higher weight.

4.  The method of claim 2 or 3, further comprising the steps of:

    measuring the similarity on the similar object the user gave feedback based on the selection from the group data on similar objects or the retrieval result by using every weight included in the multimedia descriptors; and
    retrieving based on the selected weight outputting the highest similarity among other similarities measured.

5.  The method of one of the preceding claims, wherein if the user selects a particular descriptor for the retrieval, only the weight studied of the descriptors selected from the plurality of weights included in the multimedia descriptors is used for the retrieval.

6.  The method of one of the preceding claims, wherein if the user designates a query object and a retrieval object, only the weight studied of the predetermined descriptors in accordance with the kinds of retrieval object and query object is used for the retrieval.

7.  A multimedia retrieval method for retrieving a multimedia object by using a plurality of descriptors, the method comprising of the steps of:

    studying of a descriptor weight in accordance with a viewpoint of each query for the retrieval and adding the weight to a multimedia descriptor; and
    retrieving based on the selected weight corresponding to the viewpoint of the query among other descriptor weights included in the multimedia descriptor at the time of the multimedia retrieval.

8.  The method of claim 7, wherein the studying of the weight in accordance with the viewpoint of the query is accomplished through the retrieval result from retrieving images, or feedback given by a user regarding a similar object in connection from the viewpoint of the corresponding query concerning group data on any similar objects defined in advance

9.  The method of claim 8, wherein the descriptor increasing the similarity between similar objects results a higher weight.

10. The method of one of claims 7 to 9, further comprising the steps of:

measuring the similarity on the similar object the user gave feedback based on the selection from the group data on similar objects or the retrieval result by using every weight included in the multimedia descriptors; and retrieving based on the selected weight outputting the highest similarity among other similarities measured.

**11.** The method of one of claims 7 to 10, further comprising the steps of:

displaying the viewpoint of the query described in the weight scheme; and
retrieving based on the selected weight in accordance with the viewpoint of the query by selecting the viewpoint of the query of the user among other viewpoints displayed.

**12.** A multiweight generating method based on a viewpoint of a query, the method comprising the steps of:

generating and saving a weight value for representing an importance of a descriptor included in a multimedia object; and
generating and saving technology data on a viewpoint of a query necessary for the weight value.

**13.** A multiweight generating method based on a viewpoint of a query, the method comprising the steps of:

generating and saving a weight value for representing an importance of a descriptor included in a multimedia object; and
generating and saving data corresponding to the descriptor for indicating what the weight value each descriptor intends to describe.

**14.** A multimedia retrieval medium, comprising a plurality of descriptors for retrieving a multimedia object and a data feature containing an optimum weight data in accordance with each combination of descriptors necessary for a query among the plurality of descriptors.

**15.** A medium of claim 14, wherein the combination of descriptors and the weights are different from one another depending on the viewpoint of each query.

## FIG. 1

101 — Arrange similarities of descriptors of Set B
(setting descriptors at equivalent importance)

102 — Retrieve error in arranged retrieval result
(No. of Error = E, No. of correct images = k)

103
Yes
End ◄——— $E/k <= Th1?$

No

104
$n = 2 \times E$

105
Give feedback as many as feedback images (n) decided
(n/2 relevant iamges , n/2 irrelevant)

106
Update weights by using feedback given

107
Arrange an retrieval images by using updated weights

108
Retrieve error shown in retrieval result list
(No. of Error = E', No. of lower-ranking relevant images than k)

109
Yes
End ◄——— $E'/k <= Th1?$

No

110
$E-E' > Th2?$
(or $E \times Th2' > E'$)    No

Yes

111
$n = E' \times 2$

112
$n = n \times b,$
$(0<b<1)$

113
$E = E'$

FIG. 2

Fig. 3

FIG. 3

## FIG. 4

EP 1 209 585 A2

| | |
|---|---|
| Query image | |

| Similar image 1 | Similar image 2 | Similar image 3 | Similar image 4 |
|---|---|---|---|
| **Similar image 5** | **Similar image 6** | Similar image 7 | Similar image 8 |

# FIG. 5

500 — Arrange similarities of descriptors of Set B
(setting descriptors at equivalent importance)

501 — Give feedback on similar image in accordance
with viewpoint of current query

502 — Retrieve error in arranged retrieval result
(No. of Error = E, No. of correct images = k)

503 — E/k <= Th1? — Yes → End

No

504 — $n = 2 \times E$

505 — Give feedback as many as feedback images (n) decided
(n/2 relevant iamges , n/2 irrelevant)

506 — Update weights by using feedback given

507 — Arrange an retrieval images by using updated weights

508 — Retrieve error shown in retrieval result list
(No. of Error = E', No. of lower−ranking relevant images than k)

509 — E'/k <= Th1? — Yes → End

No

510 — E−E' > Th2?
(or E x Th2' >E') — No

Yes

511 — $n = E' \times 2$

512 — $n = n \times b,$
$(0 < b < 1)$

513 — E = E'

# FIG. 6

Weight Scheme — 600

601
Weights

Query viewpoint scheme — 604

Descriptor ID — 602

Weight Value — 603

# FIG. 8

Weight Scheme — 800

801
Weights

ID list of Relevant descriptor — 804

Descriptor ID — 802

Weight Value — 803

# FIG. 7

(a) Example of Query image

| | Wooden house |
|---|---|
| | Landscape with blue sky |
| | Landscape with field |
| | |

(b) Example of Query viewpoint